# EUROPÄISCHE PATENTSCHRIFT

(11) **EP 4 332 382 B1**
(45) Veröffentlichungstag und Bekanntmachung des Hinweises auf die Patenterteilung: **13.08.2025**
(21) Anmeldenummer: 23193850.7
(22) Anmeldetag: 29.08.2023
(51) Int. Cl.: H01R 13/74, H01R 24/58, H01R 107/00, H02K 5/132, H02K 15/14, F04D 13/06, F04D 13/08, H02K 5/22, H01R 24/68

(54) **VERFAHREN ZUM HERSTELLEN EINER TAUCHMOTORPUMPE**
METHOD FOR PRODUCING A SUBMERSIBLE MOTOR PUMP
PROCÉDÉ DE FABRICATION D'UNE POMPE SUBMERSIBLE

(30) Priorität: 31.08.2022 BE 202205692
(43) Veröffentlichungstag der Anmeldung: 06.03.2024
(73) Patentinhaber: WILO SE, 44263 Dortmund (DE)
(72) Erfinder: Wegner, Benjamin, 44263 Dortmund (DE); Huster, Bernd, 44263 Dortmund (DE)
(74) Vertreter: Michalski Hüttermann & Partner Patentanwälte mbB

(56) Entgegenhaltungen:
- IT-A1- TO20 070 549
- US-A- 5 567 170
- US-A1- 2003 190 243

## Beschreibung

### Technisches Gebiet

Die Erfindung betrifft ein Verfahren zum Herstellen einer Tauchmotorpumpe insbesondere zum Fördern von Schmutz- und/oder Abwasser und aufweisend ein zylinderartiges, zwischen einer offenen Grundfläche und einer der Grundfläche axial gegenüberliegenden Deckfläche einen Innenraum ausbildendes Topfgehäuse mit einer in dem Topfgehäuse vorgesehenen Steckverbinderöffnung und einem in dem Innenraum vorgesehen Motor mit einem zylinderartigen Stator aufweisend eine Mehrzahl Windungen und einen mit Enden der Windungen verbundenen ersten Steckverbinder. Die Erfindung betrifft ferner eine Tauchmotorpumpe zum Fördern von Schmutz- und/oder Abwasser aufweisend ein zylinderartiges, zwischen einer offenen Grundfläche und einer der Grundfläche axial gegenüberliegenden Deckfläche einen Innenraum ausbildendes Topfgehäuse mit einer in dem Topfgehäuse vorgesehenen Steckverbinderöffnung und einem in dem Innenraum vorgesehen Motor mit einem zylinderartigen Stator aufweisend eine Mehrzahl Windungen und einen mit Enden der Windungen verbundenen ersten Steckverbinder.

### Hintergrund der Erfindung

Tauchmotorpumpen sind aus dem Stand der Technik bekannt und dienen zum Fördern eines Fluids mittels einer Drehbewegung eines Laufrades. Das zu fördernde Fluid tritt über eine Saugöffnung in einen Pumpenraum der Tauchmotorpumpe ein, wird von dem rotierenden Laufrad erfasst und in der Folge oftmals in einen Leitungsabschnitt, der auch als Druckrohr bezeichnet wird, befördert.

Derartige Tauchmotorpumpen, wie zum Beispiel in US5567170A offenbart, weisen oftmals ein Gehäuse auf, welches als zylinderartiges Topfgehäuse mit einem in einem Innenraum vorgesehen Motor zum Antreiben des unter dem Topfgehäuse vorgesehenen Laufrads. Ein solcher Motor weist einen zylinderartigen Stator aufweisend eine Mehrzahl Windungen auf, wobei Enden der Windungen mit einem ersten Steckverbinder versehen sind. Gewöhnlich ist in einer Deckfläche des Topfgehäuses eine Öffnung vorgesehen, durch die ein Kabel aufweisend einen zweiten Steckverbinder hindurchgeführt ist. Der zweite Steckverbinder ist innerhalb des Topfgehäuses mit den ersten Steckverbinder elektrisch verbunden.

Auch wenn eine solche Ausgestaltung einen zuverlässigen Betrieb der Tauchmotorpumpe gewährleistet, ist die Montage der Steckverbindung aufwendig. Denn zum Verbinden muss der erste Steckverbinder aus der Öffnung herausgeführt werden, außerhalb des Topfgehäuses mit den zweiten Steckverbinder verbunden werden und schließlich müssen die miteinander verbundenen ersten und zweiten Steckverbinder durch die Öffnung hindurch wieder in das Topfgehäuse eingeführt werden. Letztendlich muss das Kabel an der Öffnung gegenüber dem Topfgehäuse abgedichtet werden.

### Beschreibung der Erfindung

Ausgehend von dieser Situation ist es eine Aufgabe der vorliegenden Erfindung, ein Verfahren zum Herstellen einer Tauchmotorpumpe sowie eine entsprechende Tauchmotorpumpe anzugeben, die gegenüber der zuvor beschriebenen Tauchmotorpumpe wesentlich einfacher herstellbar ist.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Verfahren zum Herstellen einer Tauchmotorpumpe insbesondere zum Fördern von Schmutz- und/oder Abwasser und aufweisend
ein zylinderartiges, zwischen einer offenen Grundfläche und einer der Grundfläche axial gegenüberliegenden Deckfläche einen Innenraum ausbildendes Topfgehäuse mit einer in dem Topfgehäuse vorgesehenen Steckverbinderöffnung,
einen in dem Innenraum vorgesehen Motor mit einem zylinderartigen Stator aufweisend eine Mehrzahl Windungen und einen mit Enden der Windungen verbundenen, insbesondere hin zu der Deckfläche orientierten und mit wenigstens einer radial federnden Rastlasche versehenen ersten Steckverbinder, und mit den Schritten:
   Greifen des ersten Steckverbinders von außerhalb des Topfgehäuses durch die Steckverbinderöffnung hindurch,
   Einführen des ersten Steckverbinders von dem Innenraum in die Steckverbinderöffnung, und
   Verrasten der wenigstens einen Rastlasche mit dem Topfgehäuse.

Die Aufgabe wird ferner gelöst durch eine Tauchmotorpumpe insbesondere zum Fördern von Schmutz- und/oder Abwasser und aufweisend
ein zylinderartiges, zwischen einer offenen Grundfläche und einer der Grundfläche axial gegenüberliegenden Deckfläche einen Innenraum ausbildendes Topfgehäuse mit einer in dem Topfgehäuse vorgesehenen Steckverbinderöffnung, und
einen in dem Innenraum vorgesehen Motor mit einem zylinderartigen Stator aufweisend eine Mehrzahl Windungen und einen mit Enden der Windungen verbundenen, insbesondere hin zu der Deckfläche orientierten und mit wenigstens einer Rastlasche versehenen ersten Steckverbinder, wobei
der erste Steckverbinder von außerhalb des Topfgehäuses durch die Steckverbinderöffnung hindurch von dem Innenraum in die Steckverbinderöffnung zum Verrasten der wenigstens einen Rastlasche mit dem Topfgehäuse einführbar ist.

Ein wesentlicher Punkt des vorgeschlagenen Verfahrens sowie der vorgeschlagenen Tauchmotorpumpe, nachfolgend zusammengefasst Tauchmotorpumpe genannt, liegt darin, dass gegenüber den aus dem Stand der Technik bekannten Ausgestaltungen der erste Steckverbinder nicht aus dem Topfgehäuse zum Verbinden mit einem zweiten Steckverbinder herausgeführt werden muss, nach dem Verbinden der beiden Steckverbinder wieder in das Topfgehäuse eingeführt werden müssen sowie nachfolgend ein mit dem zweiten Steckverbinder verbundenes Kabel gegenüber dem Topfgehäuse abgedichtet werden muss. Dadurch, dass der erste Steckverbinder an den Topfgehäuse verrastbar ist, lässt sich der zweite Steckverbinder einfach auf den derart verrasteten ersten Steckverbinder zum insbesondere feuchtigkeitsdichten Verbinden mit diesem aufstecken, wodurch die Montage der Tauchmotorpumpe ganz wesentlich vereinfacht wird. Zudem kann die vorgeschlagene Tauchmotorpumpe durch das Verrasten des ersten Steckverbinders an dem Topgehäuse eine Art dichtungsloses Dichtsystem ermöglichen.

Die Tauchmotorpumpe eignet sich grundsätzlich zur Förderung jeglichen Fluids. Aufgrund ihrer Robustheit gegenüber Feststoffen und Chemikalien eignet sich die Tauchmotorpumpe vor allem zur Verwendung als Schmutzwasser- und/oder Abwasser-Tauchpumpe. Schmutzwasser- und/oder Abwasser-Tauchpumpen dienen insbesondere zum Abpumpen von verdrecktem Wasser beispielsweise von Hochwasser, in überfluteten Baugruben, in Waschküchen, in schlammigen Gruben, in Biotopen und/oder von Gartenteichen, von Sickerschächten sowie in Kellern, und insbesondere zum Pumpen von Wasser mit verschiedenen Verunreinigungsgraden wie beispielsweise Steine, Schlamm Geröll oder Fäkalien. Darüber hinaus kann die Tauchmotorpumpe auch für eine Heizung mit Heizkörpern, eine Radiatorheizung, eine Fußbodenheizung, eine Deckenkühlung, eine Wasserzirkulation in einer Trinkwasseranlage oder eine Trinkwasseranlage mit Speicherladesystem verwendet werden, wobei vorstehende Aufzählung nicht abschließend ist, sondern weitere, hier nicht genannte Anlagenarten umfasst sein können. Der Motor ist innerhalb des Topfgehäuses angeordnet, welches Topfgehäuse bevorzugt feuchtigkeitsdicht gestaltet ist. Durch den Motor wird regelmäßig ein über eine Motorwelle an den Motor angebundenes Laufrad zum Fördern des Fluids angetrieben. Die Tauchmotorpumpe kann als Kreiselpumpe ausgestaltet sein.

Das Topfgehäuse ist bevorzugt bis auf die Steckverbinderöffnung und die offene Grundfläche geschlossen gestaltet, insbesondere feuchtigkeitsdicht gestaltet. Die Steckverbinderöffnung ist bevorzugt in der der Grundfläche axial gegenüberliegenden Deckfläche vorgesehen, kann alternativ ebenso in der Mantelfläche des Topfgehäuses vorgesehen sein. Die Steckverbinderöffnung ist bevorzugt kreisartig gestaltet. Der Motor weist bevorzugt neben dem Stator einen Rotor auf, welcher einstückig mit der Motorwelle gestaltet sein kann. Der Stator kann aus geblechtem Stahl gestaltet sein und dient in bekannter Weise als gemeinsamer Kern für die Windungen, die auch Induktionsspulen genannt werden.

Die Enden der Windungen sind bevorzugt als Litzen in axialer Richtung aus dem zylinderartigen Stator herausgeführt und elektrisch leitend mit den ersten Steckverbinder verbunden. Bevorzugt sind die Windungen als Litzen gestaltet. Die radial federnde Rastlasche ist bevorzugt gestaltet, dass die Federkraft radial nach außen wirkt. Das bedeutet, dass die Rastlasche zum Einführen des ersten Steckverbinders in die Steckverbinderöffnung nach innen hin zu einer Längsachse des Steckverbinders entgegen der Federkraft komprimierbar ist bzw. aufgrund der Federkraft weg von der Längsachse strebt. Die Rastlasche erstreckt sich bevorzugt in axialer Richtung, insbesondere parallel zu Steckkontakten des ersten Steckverbinders.

Bei der vorgeschlagenen Tauchmotorpumpe wird insbesondere davon ausgegangen, dass der Stator in dem Topfgehäuse derart angeordnet ist, dass die Enden der Windungen und derart der erste Steckverbinder hin zu der Deckfläche orientiert sind. Nach Verrasten der wenigstens einen Rastlasche mit dem Topfgehäuse, insbesondere an der Steckverbinderöffnung, ist der erste Steckverbinder insbesondere formschlüssig, kraftschlüssig und/oder feuchtigkeitsdicht mit dem Topfgehäuse verbunden. Die Enden der Windungen und derart der erste Steckverbinder können jedoch auch hin zu der Grundfläche orientiert sein.

Gemäß einer bevorzugten Weiterbildung des Verfahrens oder der Tauchmotorpumpe weist der erste Steckverbinder eine, insbesondere zwei, drei oder mehr, radial feststehende Greiflasche auf, so dass durch Greifen der Greiflasche und der Rastlasche, insbesondere mittels eines Werkzeugs, die wenigstens eine Rastlasche zum Einführen des ersten Steckverbinders in die Steckverbinderöffnung radial komprimierbar ist. Das Greifen und/oder das Einführen des Werkzeugs erfolgt bevorzugt in axialer Richtung bezogen auf den ersten Steckverbinder. Die radial feststehende Greiflasche erstreckt sich bevorzugt in axialer Richtung und/oder ist radial beanachbart zu der Rastlasche angeordnet. Die Rastlasche kann eine sich radial erstreckende Rastlaschenöffnung und/oder die Greiflasche kann eine sich radial erstreckende Greiflaschenöffnung aufweisen, in welche das Werkzeug axial zum Komprimieren der Rastlasche einführbar ist. Durch eine derartige Greiflasche lässt sich der erste Steckverbinder einerseits besonders einfach greifen und andererseits in die Steckverbinderöffnung einführen, ohne dass es zu einer Beschädigung des ersten Steckverbinders kommt.

Gemäß einer weiteren bevorzugten Weiterbildung des Verfahrens oder der Tauchmotorpumpe ist eine in dem Innenraum angeordnete, der Steckverbinderöffnung zugeordneten Halteeinrichtung für den ersten Steckverbinder vorgesehen, wobei der erste Steckverbinder in der Halteeinrichtung zum Greifen des ersten Steckverbinders angeordnet ist. Die Halteeinrichtung ist bevorzugt als eine Art Ablage oder Halterung ausgebildet, in die der erste Steckverbinder beim Einsetzen des Stators in das Topfgehäuse oder beim Aufsetzen des Stators auf das Topfgehäuse eingesetzt wird. Aus dieser Halteeinrichtung kann der Stator in einfacher und definierter Weise gegriffen werden, um in die Steckverbinderöffnung eingeführt zu werden. Die Halteeinrichtung ist bevorzugt, in Blickrichtung von außen durch die Steckverbinderöffnung, axial unterhalb dieser angeordnet.

Nach einer anderen bevorzugten Weiterbildung des Verfahrens oder der Tauchmotorpumpe weist der erste Steckverbinder einen nicht-rotationssymmetrischen Querschnitt auf und weist die Steckverbinderöffnung einen zu dem ersten Steckverbinder korrespondierenden oder einen nicht-korrespondierenden Querschnitt auf, so dass der erste Steckverbinder in der Steckverbinderöffnung gegen Verdrehen gesichert oder nicht gesichert ist. Ferner lässt sich durch einen derartigen nicht-rotationssymmetrischen Querschnitt eine definierte Steckposition ausbilden, in welche der zweite Steckverbinder zum Verbinden mit dem ersten Steckverbinder ein führbar ist.

Gemäß einer weiteren bevorzugten Weiterbildung des Verfahrens oder der Tauchmotorpumpe ist die Steckverbinderöffnung in der Deckfläche oder in einer Mantelfläche des Topfgehäuses vorgesehen. Besonders bevorzugt ist die Halteeinrichtung unmittelbar unterhalb der Steckverbinderöffnung vorgesehen. Bevorzugt korrespondiert die Steckverbinderöffnung in ihrem Innendurchmesser zu einem Außendurchmesser des ersten Steckverbinders, sodass dieser derart in der Steckverbinderöffnung ortsfest fixierbar ist.

Nach einer anderen bevorzugten Weiterbildung des Verfahrens oder der Tauchmotorpumpe ist ein mit dem ersten Steckverbinder verbindbarer zweiter Steckerverbinder aufweisend eine Metallhülse und einen eine Mehrzahl zweite Steckkontakte haltenden zweiten Stecckontaktkörper aus Kunststoff vorgesehen, wobei der zweite Steckkontaktkörper eine sich radial nach außen erstreckende Rastnase aus Kunststoff und die Metallhülse eine korrespondierende sich radial nach außen erstreckende Rastausnehmung sowie eine sich radial nach innen erstreckende Rastnase aus Metall derart aufweist, dass beim Einführen des zweiten Steckkontaktkörpers in die Metallhülse die Rastnase aus Metall zunächst die Rastnase aus Kunststoff radial nach innen drückt und nach Verrasten der Rastnase aus Kunststoff mit der Rastausnehmung in den zweiten Steckkontaktkörper insbesondere dichtungslos abdichtend verrastet.

Gemäß einer weiteren bevorzugten Weiterbildung des Verfahrens oder der Tauchmotorpumpe ist ein mit dem ersten Steckverbinder verbindbaren zweiten Steckerverbinder aufweisend einen eine Mehrzahl zweite Steckkontakte haltenden und ein zweites Steckgesicht ausbildenden zweiten Steckkontaktkörper vorgesehen, wobei der zweite Steckverbinder steckgesichtsseitig eine Einfüllöffnung zum Vergießen der Mehrzahl zweiten Steckkontakte in dem zweiten Steckkontaktkörper mit Vergussmaterial und ein axial gegenüber der Einfüllöffnung abgesetztes Überlaufvolumen zum Auffangen aus der Einfüllöffnung austretenden überschüssigen Vergussmaterials aufweist.

Der zweite Steckkontaktkörper, ebenso wie ein erster Steckkontaktkörper des ersten Steckverbinders, ist bevorzugt aus Kunststoff gestaltet. Die Einfüllöffnung und/oder das Überlaufvolumen erstreckt sich bevorzugt axial in den zweiten Steckkontaktkörper hinein. Abgesetzt bedeutet insbesondere, dass das Überlaufvolumen gegenüber der Einfüllöffnung axial weg von dem Steckgesicht angeordnet ist, insbesondere in Richtung eines mit dem zweiten Steckverbinder verbundenen Kabels, so dass das überschüssige Vergussmaterial aus der Einfüllöffnung in das Überlaufvolumen ,überlaufen' kann. Das Vergießen des zweiten Steckkontaktkörpers erfolgt bevorzugt nach einem Verbinden der zweiten Stecckontakte mit Litzen eines Kabels und wenn der derart verbundene zweite Steckkontaktkörper in ein nachfolgend beschriebenes zweites Steckkontaktgehäuse eingesetzt ist.

Nach einer anderen bevorzugten Weiterbildung des Verfahrens oder der Tauchmotorpumpe ist ein mit dem ersten Steckverbinder verbindbarer zweiter Steckerverbinder aufweisend einen eine Mehrzahl zweite Steckkontakte haltenden zweiten Steckkontaktkörper, ein zweites Steckkontaktgehäuse, in welches der zweite Steckkontaktkörper eingeführt ist, und einen einstückig gestalteten, das zweite Steckkontaktgehäuse radial umgreifenden Dichtungsring vorgesehen, wobei ein erster Teil des Dichtungsrings radial zwischen dem zweiten Steckkontaktkörper und dem zweiten Steckkontaktgehäuse angeordnet ist und ein zweiter Teil axial auf dem zweiten Steckkontaktgehäuse zum insbesondere feuchtigkeitsdichten Abdichten gegenüber dem Topfgehäuse und/oder dem ersten Steckverbinder aufliegt. Der Dichtungsring ist bevorzugt aus einem Elastomer, insbesondere aus Gummi oder einem thermoplastischen Elastomer, und/oder aus Kunststoff gestaltet. Der erste Teil und der zweite Teil können umlaufend oder an mehreren Stellen miteinander verbunden sein. Der zweite Teil weist bevorzugt einen kreisrunden Querschnitt auf, während der erste Teil einen flachen, sich axial erstreckenden Querschnitte aufweisen kann. Bevorzugt weist der zweite Steckverbinder und/oder der erste Steckverbinder ein Rastmittel zum Verrasten der Steckbinder miteinander auf.

Gemäß einer weiteren bevorzugten Weiterbildung des Verfahrens oder der Tauchmotorpumpe umfasst der erste Steckverbinder zehn achsensymmetrisch angeordnete erste Stecckontakte und/oder weist der zweite Steckverbinder eine mittels Kabelbinder und/oder Bindedraht fixierbare Zugentlastung für ein Kabel des zweiten Steckverbinders auf. Der erste Steckverbinder, der zweite Steckverbinder und/oder das zweite Steckkontaktgehäuse können durch Spritzgießen hergestellt sein, wobei bevorzugt die Zugentlastung an das zweite Steckkontaktgehäuse angespritzt ist.

Nach einer anderen bevorzugten Weiterbildung des Verfahrens oder der Tauchmotorpumpe ist das Topfgehäuse aus Blech gestaltet, insbesondere aus Metallblech und/oder Edelstahlblech. Gemäß einer weiteren bevorzugten Weiterbildung des Verfahrens oder der Tauchmotorpumpe weist das Topgehäuse einen Deckel auf und die Steckverbinderöffnung ist in dem Deckel vorgesehen. Der Deckel kann abnehmbar gestaltet sein und/oder ist bevorzugt feuchtigkeitsdicht mit dem Topfgehäuse verbunden.

Nach einer anderen bevorzugten Weiterbildung des Verfahrens oder der Tauchmotorpumpe ist ein durch den Motor angetriebenes und an der Grundfläche angeordnetes Laufrad vorgesehen. Das Laufrad ist bevorzugt in einem Pumpengehäuse angeordnet, welches unterhalb dem Topfgehäuse angeordnet ist, wobei das Pumpengehäuse mit dem Topfgehäuse ortsfest verschraubt sein kann. An dem Pumpengehäuse können Füße vorgesehen sein, auf die die Tauchmotorpumpe abstellbar ist.

Nach einer bevorzugten Weiterbildung umfasst das Verfahren den Schritt: Greifen des ersten Steckverbinders mittels eines Werkzeugs. Das Werkzeug kann eine Zange, insbesondere eine Spitzzange sein. Bevorzugt werden Spitzen der Zange durch die Steckverbinderöffnung hindurch in das Topfgehäuse hinein eingeführt, um den ersten Steckverbinder zugreifen und anschließend axial hin zum Topfgehäuse zum Verraten mit demselben zu führen.

Die Aufgabe wird weiterhin gelöst durch eine Abwasserhebeanlage umfassend eine Tauchmotorpumpe wie zuvor beschrieben. Als Abwasserhebeanlage, auch Hebeanlage genannt, wird im Allgemeinen ein Pumpensystem verstanden, das das Abwasser mittels der Tauchmotorpumpe anhebt, um es abfließen zu lassen. Die Abwasserhebeanlage kann als automatisch arbeitende Anlage gestaltet sein, die Abwasser, das unter einer Rückstauebene anfällt, rückstausicher abzuleiten oder auf ein höherliegendes Niveau pumpen. Abwasserhebeanlagen werden oftmals am tiefsten Punkt eines Kellers, einer Grube oder einem Schacht, insbesondere einem Pumpensumpf, vorgesehen und regelmäßig mit der öffentlichen Kanalisation verbunden, um beispielsweise eine Hausentwässerung betriebsfähig zu halten.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine schematisch perspektivische Ansicht einer Tauchmotorpumpe mit einem Topfgehäuse gemäß einem bevorzugten Ausführungsbeispiel der Erfindung,
- Fig. 2: eine schematisch perspektivische Ansicht einer Deckfläche des Topfgehäuses mit einem daran verrasteten ersten Steckverbinder gemäß dem bevorzugten Ausführungsbeispiel der Erfindung,
- Fig. 3: eine schematisch perspektivische Ansicht des ersten Steckverbinder mit einem Stator der Tauchmotorpumpe gemäß dem bevorzugten Ausführungsbeispiel der Erfindung,
- Fig. 4: eine Schnittansicht durch das Topfgehäuse mit dem ersten Steckverbinder und einem damit verbundenen zweiten Steckverbinder gemäß dem bevorzugten Ausführungsbeispiel der Erfindung,
- Fig. 5: eine schematisch perspektivische Ansicht des zweiten Steckverbinder gemäß dem bevorzugten Ausführungsbeispiel der Erfindung,
- Fig. 6: eine Schnittansicht durch den zweiten Steckverbinder gemäß dem bevorzugten Ausführungsbeispiel der Erfindung,
- Fig. 7: eine schematisch perspektivische Ansicht des ersten Steckverbinders gemäß dem bevorzugten Ausführungsbeispiel der Erfindung,
- Fig. 8: eine schematisch perspektivische Ansicht des zweiten Steckverbinders gemäß dem bevorzugten Ausführungsbeispiel der Erfindung,
- Fig. 9: eine schematisch perspektivische Ansicht eines zweiten Steckkontaktgehäuses des zweiten Steckverbinders gemäß dem bevorzugten Ausführungsbeispiel der Erfindung,
- Fig. 10: eine schematisch perspektivische Ansicht eines Dichtungsrings des zweiten Steckerbinders,
- Fig. 11: eine schematische Teil-Schnittansicht der Tauchmotorpumpe mit dem Topfgehäuse gemäß einem weiteren bevorzugten Ausführungsbeispiel der Erfindung, und
- Fig. 12: eine schematische Teil-Schnittansicht eines Teils des zweiten Steckverbinders der Tauchmotorpumpe der Fig. 11 gemäß dem weiteren bevorzugten Ausführungsbeispiel der Erfindung.

### Detaillierte Beschreibung der Ausführungsbespiele

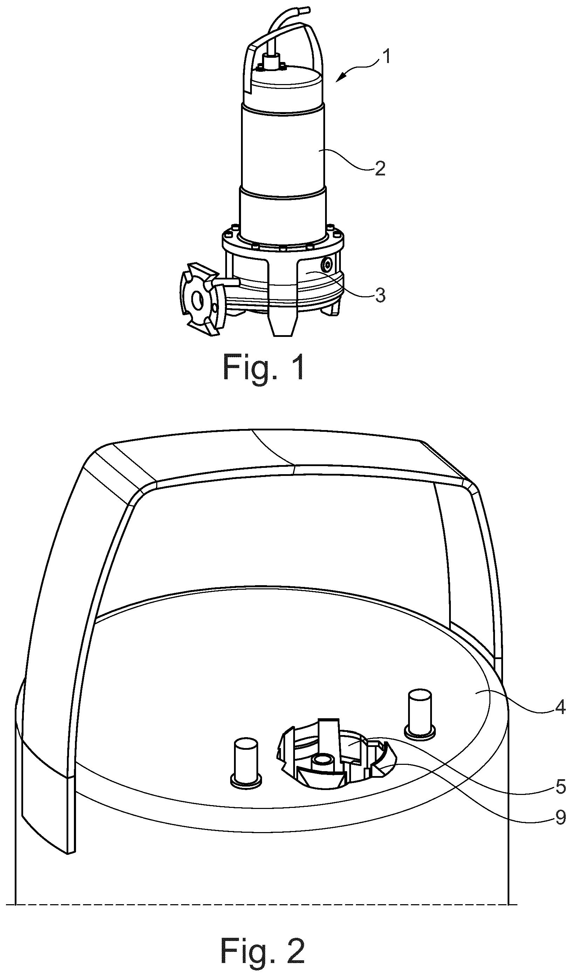

Fig. 1 zeigt eine schematisch perspektivische Ansicht einer Tauchmotorpumpe 1 mit einem Topfgehäuse 2 gemäß einem bevorzugten Ausführungsbeispiel der Erfindung. Die Tauchmotorpumpe 1 ist als Schmutzwasser- und/oder Abwasser-Tauchpumpen ausgeführt und lässt sich zum Abpumpen von verdrecktem Wasser beispielsweise von Hochwasser, in überfluteten Baugruben, in Waschküchen, in schlammigen Gruben, in Biotopen und/oder von Gartenteichen, von Sickerschächten sowie in Kellern, und insbesondere zum Pumpen von Wasser mit verschiedenen Verunreinigungsgraden wie beispielsweise Steine, Schlamm Geröll oder Fäkalien verwenden.

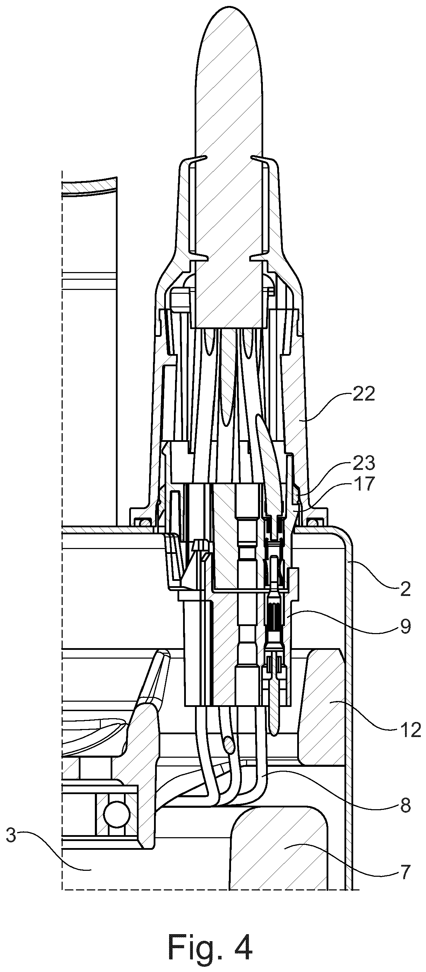

Das zylinderartige aus Blech gestaltete Topfgehäuse 2 weist eine offene Grundfläche auf, an die sich ein Pumpengehäuse 3 mit einem darin vorgesehenen, in der Figur nicht gezeigten Laufrad zum Fördern des Schmutzwasser- und/oder Abwassers anschließt. Eine der Grundfläche axial gegenüberliegende Deckfläche 4, im Detail näher zu erkennen in Fig. 2, ist bis auf eine darin vorgesehene Steckverbinderöffnung 5 geschlossen. Derart ist zwischen der Grundfläche, der Deckfläche 4 und einer Mantelfläche des Topfgehäuses 2 ein Innenraum 6, angedeutet in Fig. 4, ausgebildet.

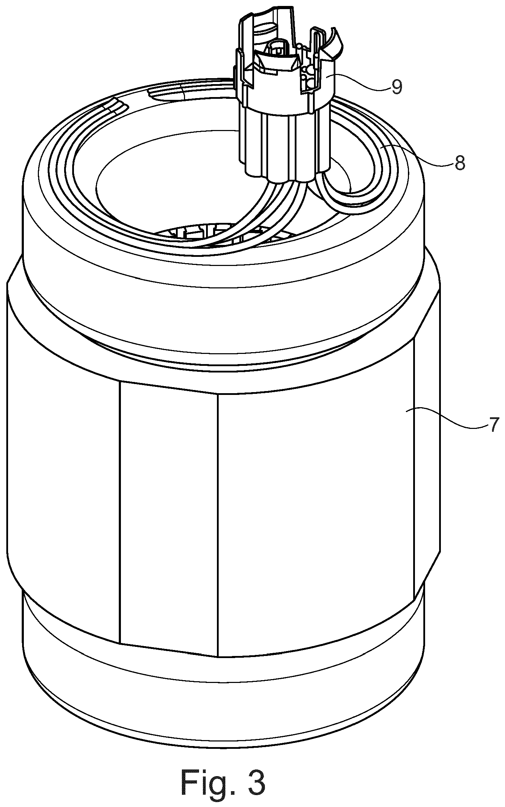

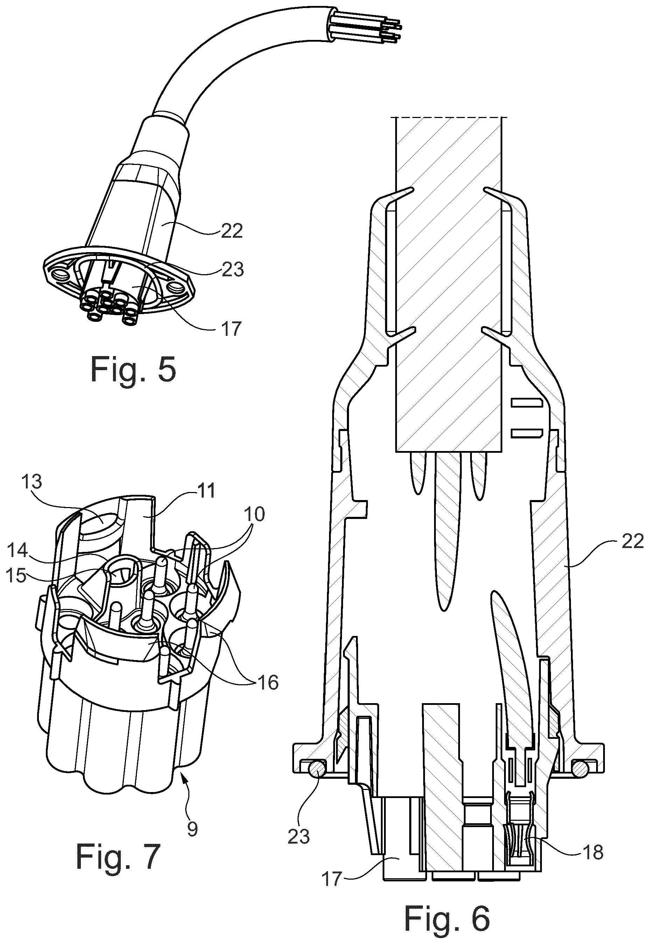

In dem Innenraum 6 des Topfgehäuses 2 ist ein Motor mit einem nicht näher gezeigten Rotor zum Antreiben des Laufrades vorgesehen. Der Motor weist einen in Fig. 3 gezeigten zylinderartigen Stator 7 mit einer Mehrzahl Windungen 8 auf. Als Litzen gestaltete Enden der Windungen 8 sind an einer Deckfläche des Stators 7 aus diesem herausgeführt und mit einem in Fig. 7 näher gezeigten ersten Steckverbinder 9 verbunden. Der Stator 7 ist derart in dem Innenraum 6 des Topfgehäuses 2 angeordnet, dass die Deckfläche des Stators 7 mit dem mit den Enden der Windungen 8 verbundenen ersten Steckverbinder 9 hin zu der geschlossenen Deckfläche 4 des Topfgehäuses 2 hin orientiert ist, wie prinzipiell aus Fig. 4 ersichtlich.

Der wie erwähnt in Fig.7 näher gezeigte erste Steckverbinder 9 ist als männlicher Stecker mit zehn ersten Steckkontakten 10 ausgeführt, die achsensymmetrisch angeordnet in einem ersten Steckkontaktkörper aus Kunststoff gehalten ein erstes Steckgesicht des ersten Steckverbinder 9 ausbilden. Die ersten Steckkontakte 10 werden für die drei Phasen L1, L2 und L3, für Erde, für zwei Wicklungsschutzkontakte, für einen Schaltgeräteschutzkontakt sowie für Eckpunkte U1, V1 und W1 einer Dreieckschaltung für den Motor verwendet. Der erste Steckverbinder 9 weist ferner eine radial federnde Rastlasche 11 auf, die sich an einem Rand des ersten Steckverbinders 9 axial weg von diesem achsparallel zu den ersten Steckkontakten 10 erstreckt.

Sofern nun der Stator 7 in dem Innenraum 6 vorgesehen ist, beispielsweise nach Aufsetzen des Topfgehäuses 2 auf den Stator 7 oder nach Einsetzen des Stators 7 in den Innenraum 6, wird der erste Steckverbinder 9 zweckmäßigerweise zunächst in eine der Steckverbinderöffnung 5 zugeordnete Halteeinrichtung 12 eingesetzt. Die Halteeinrichtung 12 ist als Ablage ausgebildet und axial unterhalb der Steckverbindungöffnung 5 vorgesehen. Derart lässt sich der erste Steckverbinder 9 von außerhalb des Topfgehäuses 2 durch die Steckverbinderöffnung 5 hindurch mit einem Werkzeug, beispielsweise einer Spitzzange, in der Halteeinrichtung 12 greifen und axial nach außen in die Steckverbindungöffnung 5 einführen. Da die Steckverbinderöffnung 5 in ihrem nicht-korrespondierenden Innendurchmesser zum nicht-korrespondierenden Außendurchmesser des ersten Steckverbinders 9 korrespondiert, verrastet derart die Rastlasche 11 mit dem Topfgehäuse 2, wie in Fig. 2 gezeigt. Derart ist der erste Steckverbinder 9 kraft- und formschlüssig mit dem Topfgehäuse 2 verbunden.

Wie im Detail aus Fig. 7 zu erkennen, weist die Rastlasche 11 eine sich radial öffnende Rastlaschenöffnung 13 auf. Achsparallel zu der Rastlasche 11 erstreckt sich von dem ersten Steckkontaktkörper weg eine Greiflasche 14 mit einer daran vorgesehenen sich radial öffnenden Greiflaschenöffnung 15. Zum Greifen der Rastlasche 11 und der Greiflasche 14 wird die Spitzzange mit ihren Spitzen zweckmäßigerweise in die Rastlaschenöffnung 13 und die Greiflaschenöffnung 15 eingeführt, so dass die Rastlasche 11 zum Einführen des ersten Steckverbinders 9 in die Steckverbinderöffnung 5 radial komprimierbar ist. Neben der Rastlasche 11 weist der erste Steckverbinder 9 zwei weitere Rastlaschen 16 auf, die sich ebenso an dem Rand des ersten Steckverbinders 9 achsparallel von diesem wegerstrecken, wobei die Rastlasche 11 und die beiden weiteren Rastlaschen 16 in annährend regelmäßigen Abständen um das erste Steckgesicht herum angeordnet sind.

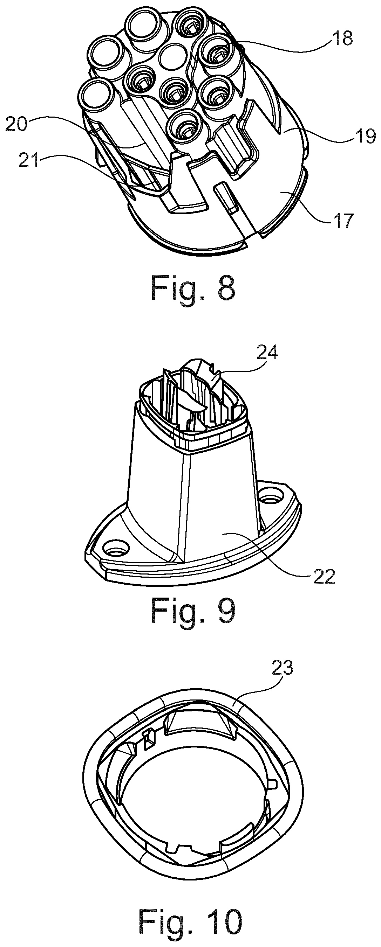

Nach Verrasten des ersten Steckverbinders 9 mit dem Topfgehäuse 2 lässt sich ein zweiter Steckverbinder 17 wie in Fig. 4 gezeigt auf den ersten Steckverbinder 9 aufstecken. Der zweite Steckverbinder 17 ist als weiblicher Stecker ausgebildet und weist, korrespondierend zum ersten Steckverbinder 9 und wie aus Fig. 8 ersichtlich, ein eine Mehrzahl zweiter Steckkontakte 18 haltenden und ein zweites Steckgesicht ausbildenden zweiten Steckkontaktkörper 19 aus Kunststoff auf. Steckgesichtsseitig ist eine sich radial erstreckende Einfüllöffnung 20 vorgesehen, in die Harz als Vergussmaterial zum Vergießen der zweiten Steckkontakte 18 mit Litzen eines damit verbundenen Kabels in den zweiten Steckkontaktkörper 19 einfüllbar ist. Axial gegenüber der Einfüllöffnung 20 abgesetzt, also weg von dem ersten Steckverbinder 9, ist ein sich radial öffnendes und sich axial erstreckende Überlaufvolumen 21 vorgesehen, in der überschüssiges Vergussmaterials auffangbar ist.

Fig. 9 zeigt ein zweites Steckkontaktgehäuse 22 aus Kunststoff, in welches der zweite Steckkontaktkörper 17 an einer Seite eingesetzt ist und in welches an einer entgegengesetzten Seite das Kabel eingeführt ist. Zwischen dem zweiten Steckkontaktgehäuse 22 und dem zweiten Steckverbinder 17 ist ein Dichtungsring 23 vorgesehen, wie im Detail in Fig. 10 gezeigt. Ein erster Teil des Dichtungsrings 23 liegt radial zwischen dem zweiten Stecckontaktkörper 19 und dem zweiten Steckkontaktgehäuse 22 an, wie aus Figs. 4 und 6 ersichtlich. Ein zweiter Teil des Dichtungsrings 23 liegt, wie aus Fig. 5 ersichtlich, axial auf dem zweiten Steckkontaktgehäuse 22 auf. Im verbundenen Zustand des ersten Steckverbinders 9 mit dem zweiten Steckverbinder, wie aus Fig. 4 ersichtlich, dichtet der zweite Teil des Dichtungsrings 23 das Steckkontaktgehäuse 22 gegenüber dem Topfgehäuse 2 ab.

Das zweite Steckkontaktgehäuse 22 weist kabelseitig an der dem zweiten Steckgesicht abgewandten Seite eine Zugentlastung 24 für das Kabel des ersten Steckverbinders auf. Die Zugentlastung 24 ist als Kunststoffformteil ausgebildet, an welcher mittels eines Kabelbinder das Kabel ortsfest fixiert war ist.

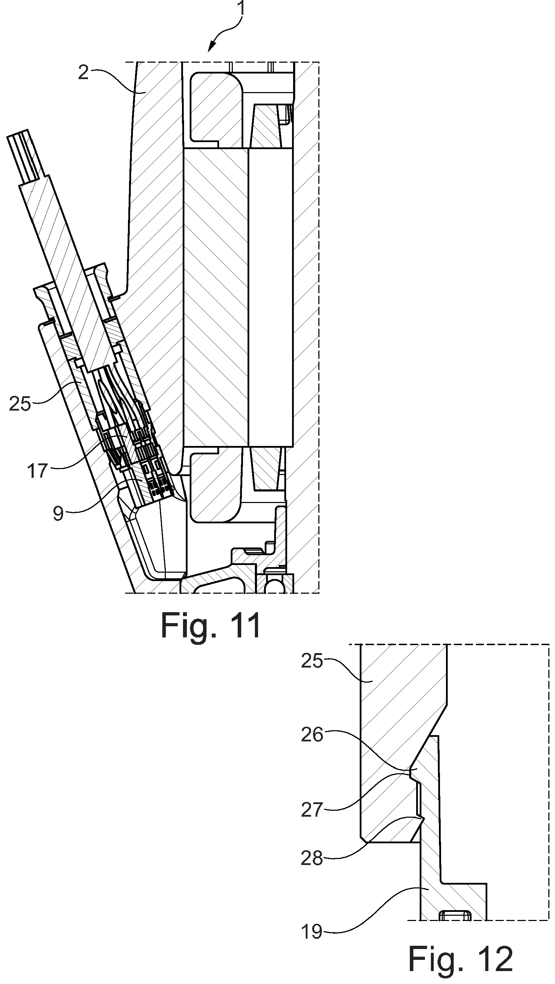

Fig. 11 zeigt eine schematische Teil-Schnittansicht der Tauchmotorpumpe 1 mit dem Topfgehäuse 2 gemäß einem weiteren bevorzugten Ausführungsbeispiel der Erfindung, wobei das Topfgehäuse 2 aus Grauguss gestaltet ist. Im Gegensatz zu dem zuvor beschriebenen Ausführungsbeispiel ist die Steckverbinderöffnung 5 in der Mantelfläche des Topfgehäuses 2 und gegenüber der Achse des Topfgehäuses 2verschwenkt angeordnet.

Während in Fig. 11 der erste Steckverbinder 9 mit dem zweiten Steckerverbinder 17 gezeigt ist, zeigt Fig. 2 einen Teil des zweiten Steckverbinders 17 in einer Schnittansicht. Der zweite Steckverbinder 17 weist eine sich axial von dem zweiten Steckgesicht in Verlängerung des zweiten Steckkontaktkörpers 19 weg erstreckende Metallhülse 25 auf.

Der zweite Steckkontaktkörper 19 weist eine sich radial nach außen erstreckende Rastnase aus Kunststoff 26 auf. Die Metallhülse 25 weist eine dazu korrespondierende sich radial nach außen erstreckende Rastausnehmung 27 sowie eine sich radial nach innen erstreckende Rastnase aus Metall 28 auf, die axial von der Rastausnehmung 27 beabstandet ist. Derart drückt beim axialen Einführen des zweiten Steckkontaktkörpers 19 in die Metallhülse 25 die Rastnase aus Metall 28 zunächst die Rastnase aus Kunststoff 26 radial nach innen, wobei der zweite Steckkontaktkörper 19 nach Verrasten der Rastnase aus Kunststoff 26 in der Rastausnehmung 27 in den zweiten Steckkontaktkörper 19 verrastet.

### Bezugszeichenliste

| | |
|---|---|
| Tauchmotorpumpe | 1 |
| Topfgehäuse | 2 |
| Pumpengehäuse | 3 |
| Deckfläche | 4 |
| Steckverbinderöffnung | 5 |
| Innenraum | 6 |
| Stator | 7 |
| Windungen, insbesondere Litzen | 8 |
| Erster Steckverbinder | 9 |
| Erste Steckkontakte | 10 |
| Rastlasche | 11 |
| Halteeinrichtung | 12 |
| Rastlaschenöffnung | 13 |
| Greiflasche | 14 |
| Greiflaschenöffnung | 15 |
| Weitere Rastlasche | 16 |
| Zweiter Steckverbinder | 17 |
| Zweite Steckkontakte | 18 |
| Zweiter Steckkontaktkörper | 19 |
| Einfüllöffnung | 20 |
| Überlaufvolumen | 21 |
| Zweites Steckkontaktgehäuse | 22 |
| Dichtungsring | 23 |
| Zugentlastung | 24 |
| Metallhülse | 25 |
| Rastnase aus Kunststoff | 26 |
| Rastausnehmung | 27 |
| Rastnase aus Metall | 28 |

## Patentansprüche

1. Verfahren zum Herstellen einer Tauchmotorpumpe (1) aufweisend
ein zylinderartiges, zwischen einer offenen Grundfläche und einer der Grundfläche axial gegenüberliegenden Deckfläche (4) einen Innenraum (6) ausbildendes Topfgehäuse (2) mit einer in dem Topfgehäuse (2) vorgesehenen Steckverbinderöffnung (5),
einen in dem Innenraum (6) vorgesehen Motor mit einem zylinderartigen Stator (7) aufweisend eine Mehrzahl Windungen (8) und einen mit Enden der Windungen (8) verbundenen und mit wenigstens einer radial federnden Rastlasche (11) versehenen ersten Steckverbinder (9), und mit den Schritten:
Greifen des ersten Steckverbinders (9) von außerhalb des Topfgehäuses (2) durch die Steckverbinderöffnung (5) hindurch,
Einführen des ersten Steckverbinders (9) von dem Innenraum (6) in die Steckverbinderöffnung (5), und
Verrasten der wenigstens einen Rastlasche (11) mit dem Topfgehäuse (2).

2. Tauchmotorpumpe (1) aufweisend
ein zylinderartiges, zwischen einer offenen Grundfläche und einer der Grundfläche axial gegenüberliegenden Deckfläche (4) einen Innenraum (6) ausbildendes Topfgehäuse (2) mit einer in dem Topfgehäuse (2) vorgesehenen Steckverbinderöffnung (5), und
einen in dem Innenraum (6) vorgesehen Motor mit einem zylinderartigen Stator (7) aufweisend eine Mehrzahl Windungen (8) und einen mit Enden der Windungen (8) verbundenen und mit wenigstens einer Rastlasche (11) versehenen ersten Steckverbinder (9), wobei
der erste Steckverbinder (9) von außerhalb des Topfgehäuses (2) durch die Steckverbinderöffnung (5) hindurch von dem Innenraum (6) in die Steckverbinderöffnung (5) zum Verrasten der wenigstens einen Rastlasche (11) mit dem Topfgehäuse (2) einführbar ist.

3. Verfahren oder Tauchmotorpumpe (1) nach einem der vorhergehenden Ansprüche, wobei der erste Steckverbinder (9) eine radial feststehende Greiflasche (14) aufweist, so dass durch Greifen der Greiflasche (14) und der Rastlasche (11), insbesondere mittels eines Werkzeugs, die wenigstens eine Rastlasche (11) zum Einführen des ersten Steckverbinders (9) in die Steckverbinderöffnung (5) radial komprimierbar ist.

4. Verfahren oder Tauchmotorpumpe (1) nach einem der vorhergehenden Ansprüche, mit einer in dem Innenraum (6) angeordneten, der Steckverbinderöffnung (5) zugeordneten Halteeinrichtung (12) für den ersten Steckverbinder (9), wobei der erste Steckverbinder (9) in die Halteeinrichtung (12) zum Greifen des ersten Steckverbinders (9) angeordnet ist.

5. Verfahren oder Tauchmotorpumpe (1) nach einem der vorhergehenden Ansprüche, wobei der erste Steckverbinder (9) einen nicht-rotationssymmetrischen Querschnitt aufweist und die Steckverbinderöffnung (5) einen zu dem ersten Steckverbinder (9) korrespondierenden oder einen nicht-korrespondierenden Querschnitt aufweist, so dass der erste Steckverbinder (9) in der Steckverbinderöffnung (5) gegen Verdrehen gesichert oder nicht gesichert ist.

6. Verfahren oder Tauchmotorpumpe (1) nach einem der vorhergehenden Ansprüche, wobei die Steckverbinderöffnung (5) in der Deckfläche (4) oder in einer Mantelfläche des Topfgehäuses (2) vorgesehen ist.

7. Verfahren oder Tauchmotorpumpe (1) nach einem der vorhergehenden Ansprüche, mit
einem mit dem ersten Steckverbinder (9) verbindbaren zweiten Steckerverbinder (17) aufweisend eine Metallhülse (25) und einen eine Mehrzahl zweite Steckkontakte (18) haltenden zweiten Steckkontaktkörper (19) aus Kunststoff, wobei
der zweite Steckkontaktkörper (19) eine sich radial nach außen erstreckende Rastnase aus Kunststoff (26) und die Metallhülse (25) eine korrespondierende sich radial nach außen erstreckende Rastausnehmung (27) sowie eine sich radial nach innen erstreckende Rastnase aus Metall (28) derart aufweist, dass beim Einführen des zweiten Stecckontaktkörpers (19) in die Metallhülse die Rastnase aus Metall (28) zunächst die Rastnase aus Kunststoff (26) radial nach innen drückt und nach Verrasten der Rastnase aus Kunststoff (26) mit der Rastausnehmung (27) in den zweiten Steckkontaktkörper (19 verrastet.

8. Verfahren oder Tauchmotorpumpe (1) nach einem der vorhergehenden Ansprüche, mit
einem mit dem ersten Steckverbinder (9) verbindbaren zweiten Steckerverbinder (17) aufweisend einen eine Mehrzahl zweite Steckkontakte (18) haltenden und ein zweites Steckgesicht ausbildenden zweiten Steckkontaktkörper (19), wobei
der zweite Steckverbinder (17) steckgesichtsseitig eine Einfüllöffnung (20 zum Vergießen der Mehrzahl zweiten Steckkontakte (18) in dem zweiten Steckkontaktkörper (19) mit Vergussmaterial und ein axial gegenüber der Einfüllöffnung (20) abgesetztes Überlaufvolumen (21) zum Auffangen aus der Einfüllöffnung (20) austretenden überschüssigen Vergussmaterials aufweist.

9. Verfahren oder Tauchmotorpumpe (1) nach einem der vorhergehenden Ansprüche, mit
einem mit dem ersten Steckverbinder (9) verbindbaren zweiten Steckerverbinder (17) aufweisend einen eine Mehrzahl zweite Steckkontakte (18) haltenden zweiten Steckkontaktkörper (19), ein zweites Steckkontaktgehäuse (22), in welches der zweite Steckkontaktkörper (19) eingeführt ist, und
einen einstückig gestalteten, das zweite Steckkontaktgehäuse (22) radial umgreifenden Dichtungsring (23), wobei
ein erster Teil des Dichtungsrings (23) radial zwischen dem zweiten Steckkontaktkörper (19) und dem zweiten Steckkontaktgehäuse (22) angeordnet ist und der zweite Teil axial auf dem zweiten Steckkontaktgehäuse (22) zum Abdichten gegenüber dem Topfgehäuse (2) und/oder dem ersten Steckverbinder (9) aufliegt.

10. Verfahren oder Tauchmotorpumpe (1) nach einem der vorhergehenden Ansprüche, wobei der erste Steckverbinder (9) zehn achsensymmetrisch angeordnete erste Steckkontakte (10) umfasst und/oder der zweite Steckverbinder (9) eine mittels Kabelbinder und/oder Bindedraht fixierbare Zugentlastung (24) für ein Kabel des zweiten Steckverbinders (9) aufweist.

11. Verfahren oder Tauchmotorpumpe (1) nach einem der vorhergehenden Ansprüche, wobei das Topfgehäuse (2) aus Blech gestaltet ist.

12. Verfahren oder Tauchmotorpumpe (1) nach einem der vorhergehenden Ansprüche, wobei das Topgehäuse einen Deckel aufweist und die Steckverbinderöffnung (5) in dem Deckel vorgesehen ist.

13. Verfahren oder Tauchmotorpumpe (1) nach einem der vorhergehenden Ansprüche, mit einem durch den Motor angetriebenen und an der Grundfläche vorgesehenen Laufrad.

14. Verfahren nach einem der vorhergehenden Ansprüche, mit dem Schritt:
Greifen des ersten Steckverbinders (9) mittels eines Werkzeugs.

15. Abwasserhebeanlage umfassend eine Tauchmotorpumpe (1) nach einem der vorhergehenden Tauchmotorpumpen-Ansprüche.

## Claims

1. A method for producing a submersible motor-driven pump (1), comprising
a cylinder-like pot housing (2), which forms an interior space (6) between an open base surface and a top surface (4) axially opposite the base surface and comprises a connector opening (5) provided in the pot housing (2),
a motor that is provided in the interior space (6) and comprises a cylinder-like stator (7) comprising a plurality of windings (8) and a first connector (9) that is connected to ends of the windings (8) and is provided with at least one radially resilient latching tab (11), and comprising the steps of:
gripping the first connector (9) from outside the pot housing (2) through the connector opening (5),
inserting the first connector (9) from the interior space (6) into the connector opening (5), and
latching the at least one latching tab (11) to the pot housing (2).

2. A submersible motor-driven pump (1) comprising
a cylinder-like pot housing (2), which forms an interior space (6) between an open base surface and a top surface (4) axially opposite the base surface and comprises a connector opening (5) provided in the pot housing (2), and
a motor that is provided in the interior space (6) and comprises a cylinder-like stator (7) comprising a plurality of windings (8) and a first connector (9) that is connected to ends of the windings (8) and is provided with at least one latching tab (11), wherein
the first connector (9) can be inserted into the connector opening (5) from outside the pot housing (2) through the connector opening (5) from the interior space (6) in order to latch the at least one latching tab (11) to the pot housing (2).

3. The method or submersible motor-driven pump (1) according to any one of the preceding claims, wherein the first connector (9) comprises a radially fixed gripping tab (14), such that, by gripping the gripping tab (14) and the latching tab (11), in particular by means of a tool, the at least one latching tab (11) can be radially compressed in order to insert the first connector (9) into the connector opening (5).

4. The method or submersible motor-driven pump (1) according to any one of the preceding claims, comprising a holding device (12) for the first connector (9), which holding device is arranged in the interior space (6) and is associated with the connector opening (5), wherein the first connector (9) is arranged in the holding device (12) for gripping the first connector (9).

5. The method or submersible motor-driven pump (1) according to any one of the preceding claims, wherein the first connector (9) has a non-rotationally symmetrical cross section and the connector opening (5) has a cross section corresponding to the first connector (9) or a non-corresponding cross section, such that the first connector (9) is secured or not secured against rotation in the connector opening (5).

6. The method or submersible motor-driven pump (1) according to any one of the preceding claims, wherein the connector opening (5) is provided in the top surface (4) or in an outer surface of the pot housing (2).

7. The method or submersible motor-driven pump (1) according to any one of the preceding claims, comprising a second connector (17) that can be connected to the first connector (9) and comprises a metal sleeve (25) and a second plug contact body (19) that is made of plastics material and holds a plurality of second plug contacts (18), wherein
the second plug contact body (19) comprises a radially outwardly extending latching lug made of plastics material (26) and the metal sleeve (25) comprises a corresponding radially outwardly extending latching recess (27) and a radially inwardly extending latching lug made of metal (28) such that, when the second plug contact body (19) is inserted into the metal sleeve, the latching lug made of metal (28) first presses the latching lug made of plastics material (26) radially inwards and, after the latching lug made of plastics material (26) latches to the latching recess (27), latches into the second plug contact body (19).

8. The method or submersible motor-driven pump (1) according to any one of the preceding claims, comprising a second connector (17) that can be connected to the first connector (9) and comprises a second plug contact body (19) that holds a plurality of second plug contacts (18) and forms a second connector face, wherein
the second connector (17) comprises, on the connector-face side, a filling opening (20) for encapsulating the plurality of second plug contacts (18) in the second plug contact body (19) with encapsulant and an overflow volume (21), which is offset axially with respect to the filling opening (20), for collecting excess encapsulant emerging from the filling opening (20).

9. The method or submersible motor-driven pump (1) according to any one of the preceding claims, comprising a second connector (17) that can be connected to the first connector (9) and comprises a second plug contact body (19) that holds a plurality of second plug contacts (18), a second plug contact housing (22), into which the second plug contact body (19) is inserted, and
an integrally formed sealing ring (23) radially surrounding the second plug contact housing (22), wherein
a first part of the sealing ring (23) is arranged radially between the second plug contact body (19) and the second plug contact housing (22) and the second part rests axially on the second plug contact housing (22) for sealing with respect to the pot housing (2) and/or the first connector (9).

10. The method or submersible motor-driven pump (1) according to any one of the preceding claims, wherein the first connector (9) comprises ten axially symmetrically arranged first plug contacts (10) and/or the second connector (9) comprises a strain relief device (24), which can be fixed by means of cable ties and/or binding wire, for a cable of the second connector (9).

11. The method or submersible motor-driven pump (1) according to any one of the preceding claims, wherein the pot housing (2) is made of sheet metal.

12. The method or submersible motor-driven pump (1) according to any one of the preceding claims, wherein the pot housing comprises a cover and the connector opening (5) is provided in the cover.

13. The method or submersible motor-driven pump (1) according to any one of the preceding claims, comprising an impeller that is driven by the motor and is provided on the base surface.

14. The method according to any one of the preceding claims, comprising the step of:
gripping the first connector (9) by means of a tool.

15. A wastewater pumping station comprising a submersible motor-driven pump (1) according to any one of the preceding submersible motor-driven pump claims.

## Revendications

1. Procédé de production d'une pompe entraînée par un moteur submersible (1), comprenant
un boîtier en forme de pot cylindrique (2), qui forme un espace intérieur (6) entre une surface de base ouverte et une surface supérieure (4) axialement opposée à la surface de base et comprend une ouverture de connecteur (5) pourvue dans le boîtier en forme de pot (2),
un moteur qui est pourvu dans l'espace intérieur (6) et comprend un stator cylindrique (7) comprenant une pluralité d'enroulements (8) et un premier connecteur (9) qui est connecté aux extrémités des enroulements (8) et est pourvu d'au moins une patte de fixation (11) élastique dans la direction radiale, et comprenant les étapes consistant à :
agripper le premier connecteur (9) depuis l'extérieur du boîtier en forme de pot (2) à travers l'ouverture de connecteur (5),
insérer le premier connecteur (9) depuis l'espace intérieur (6) dans l'ouverture de connecteur (5), et
fixer l'au moins une patte de fixation (11) au boîtier en forme de pot (2).

2. Pompe entraînée par un moteur submersible (1) comprenant
un boîtier en forme de pot cylindrique (2), qui forme un espace intérieur (6) entre une surface de base ouverte et une surface supérieure (4) axialement opposée à la surface de base et comprend une ouverture de connecteur (5) pourvue dans le boîtier en forme de pot (2), et
un moteur qui est pourvu dans l'espace intérieur (6) et comprend un stator cylindrique (7) comprenant une pluralité d'enroulements (8) et un premier connecteur (9) qui est connecté aux extrémités des enroulements (8) et est pourvu d'au moins une patte de fixation (11), dans laquelle
le premier connecteur (9) peut être inséré dans l'ouverture de connecteur (5) depuis l'extérieur du boîtier en forme de pot (2) à travers l'ouverture de connecteur (5) depuis l'espace intérieur (6) afin de fixer l'au moins une patte de fixation (11) au boîtier en forme de pot (2).

3. Procédé ou pompe entraînée par un moteur submersible (1) selon l'une quelconque des revendications précédentes, dans lesquels le premier connecteur (9) comprend une patte de préhension (14) fixée de manière radiale, de telle sorte que, en agrippant la patte de préhension (14) et la patte de fixation (11), en particulier au moyen d'un outil, l'au moins une patte de fixation (11) peut être comprimée de manière radiale afin d'insérer le premier connecteur (9) dans l'ouverture de connecteur (5).

4. Procédé ou pompe entraînée par un moteur submersible (1) selon l'une quelconque des revendications précédentes, comprenant un dispositif de maintien (12) pour le premier connecteur (9), lequel dispositif de maintien est agencé dans l'espace intérieur (6) et est associé à l'ouverture de connecteur (5), dans lesquels le premier connecteur (9) est agencé dans le dispositif de maintien (12) pour agripper le premier connecteur (9).

5. Procédé ou pompe entraînée par un moteur submersible (1) selon l'une quelconque des revendications précédentes, dans lesquels le premier connecteur (9) a une section transversale non symétrique à rotation et l'ouverture de connecteur (5) a une section transversale correspondant au premier connecteur (9) ou une section transversale non correspondante, de telle sorte que le premier connecteur (9) est sécurisé ou non sécurisé contre la rotation dans l'ouverture de connecteur (5).

6. Procédé ou pompe entraînée par un moteur submersible (1) selon l'une quelconque des revendications précédentes, dans lesquels l'ouverture de connecteur (5) est pourvue dans la surface supérieure (4) ou dans une surface externe du boîtier en forme de pot (2).

7. Procédé ou pompe entraînée par un moteur submersible (1) selon l'une quelconque des revendications précédentes, comprenant un second connecteur (17) qui peut être connecté au premier connecteur (9) et comprend un manchon métallique (25) et un corps de seconds contacts de prise (19) qui est fabriqué en un matériau plastique et renferme une pluralité de seconds contacts de prise (18), dans lesquels
le corps de seconds contacts de prise (19) comprend un taquet de fixation s'étendant vers l'extérieur de manière radiale fabriqué en un matériau plastique (26) et le manchon métallique (25) comprend un évidement de fixation s'étendant vers l'extérieur de manière radiale (27) correspondant et un taquet de fixation s'étendant vers l'intérieur de manière radiale fabriqué en un métal (28) de telle sorte que, lorsque le corps de seconds contacts de prise (19) est inséré dans le manchon métallique, le taquet de fixation fabriqué en un métal (28) commence par appuyer sur le taquet de fixation fabriqué en un matériau plastique (26) vers l'intérieur de manière radiale et, après que le taquet de fixation fabriqué en un matériau plastique (26) se fixe à l'évidement de fixation (27), se fixe dans le corps de seconds contacts de prise (19).

8. Procédé ou pompe entraînée par un moteur submersible (1) selon l'une quelconque des revendications précédentes, comprenant un second connecteur (17) qui peut être connecté au premier connecteur (9) et comprend un corps de seconds contacts de prise (19) qui renferme une pluralité de seconds contacts de prise (18) et forme une seconde face de connecteur, dans lesquels
le second connecteur (17) comprend, sur le côté faisant face au connecteur, une ouverture de remplissage (20) destinée à encapsuler la pluralité de seconds contacts de prise (18) dans le corps de seconds contacts de prise (19) avec un encapsulant et un volume de débordement (21), qui est axialement décalé par rapport à l'ouverture de remplissage (20), pour recueillir l'encapsulant en excès émergeant de l'ouverture de remplissage (20).

9. Procédé ou pompe entraînée par un moteur submersible (1) selon l'une quelconque des revendications précédentes, comprenant un second connecteur (17) qui peut être connecté au premier connecteur (9) et comprend un corps de seconds contacts de prise (19) qui renferme une pluralité de seconds contacts de prise (18), un boîtier de seconds contacts de prise (22), dans lequel le corps de seconds contacts de prise (19) est inséré, et
un joint d'étanchéité torique (23) formé de manière intégrale et entourant de manière radiale le boîtier de seconds contacts de prise (22), dans lesquels
une première partie du joint d'étanchéité torique (23) est agencée de manière radiale entre le corps de seconds contacts de prise (19) et le boîtier de seconds contacts de prise (22) et la seconde partie repose axialement sur le boîtier de seconds contacts de prise (22) pour étanchéifier par rapport au boîtier en forme de pot (2) et/ou au premier connecteur (9).

10. Procédé ou pompe entraînée par un moteur submersible (1) selon l'une quelconque des revendications précédentes, dans lesquels le premier connecteur (9) comprend dix premiers contacts de prise (10) agencés symétriquement de manière axiale et/ou le second connecteur (9) comprend un dispositif de soulagement de déformation (24), qui peut être fixé au moyen d'attaches de câble et/ou d'un fil de fixation, pour un câble du second connecteur (9).

11. Procédé ou pompe entraînée par un moteur submersible (1) selon l'une quelconque des revendications précédentes, dans lesquels le boîtier en forme de pot (2) est fabriqué en feuille métallique.

12. Procédé ou pompe entraînée par un moteur submersible (1) selon l'une quelconque des revendications précédentes, dans lesquels le boîtier en forme de pot comprend un couvercle et l'ouverture de connecteur (5) est pourvue sur le couvercle.

13. Procédé ou pompe entraînée par un moteur submersible (1) selon l'une quelconque des revendications précédentes, comprenant une turbine qui est entraînée par le moteur et est pourvue sur la surface de base.

14. Procédé selon l'une quelconque des revendications précédentes, comprenant l'étape consistant à :
agripper le premier connecteur (9) au moyen d'un outil.

15. Station de pompage d'eaux usées comprenant une pompe entraînée par un moteur submersible (1) selon l'une quelconque des revendications de pompe entraînée par un moteur submersible précédentes.
